# EUROPÄISCHE PATENTANMELDUNG

(11) **EP 0 726 692 A2**
(43) Veröffentlichungstag der Anmeldung: **14.08.1996**
(21) Anmeldenummer: 96101516.1
(22) Anmeldetag: 02.02.1996
(51) Int. Cl.: H04Q 11/06

(54) **Zeitmultiplex ZRZ-Koppeleinrichtung**

(30) Priorität: 13.02.1995 DE 19504683
(71) Anmelder: SIEMENS AKTIENGESELLSCHAFT, 80333 München (DE)
(72) Erfinder: Pfeiffer, Mathias, Dipl.-Ing., D-81669 München (DE)

(57) **Zusammenfassung**

Die Koppeleinrichtung (K) weist eine Mehrzahl von Eingangs-(IN0,...,IN7) und Ausgangs-Anschlußeinrichtungen (AUS0,..., AUS7) auf, von denen jeweils Datenströme in festgelegten Multiplex-Rahmen aufgenommen bzw. abgegeben und welche gemeinsam an einen Vermittlungsbus (VBUS) angeschlossen sind. In den Eingangs-Anschlußeinrichtungen ist jeweils ein Datenspeicher (DSP) vorgesehen, dessen Speicherzellen den Bitstellen eines Multiplex-Rahmens für die einzelnen Ausgangs-Anschlußeinrichtungen individuell zugeordnet sind. In die Datenspeicher (DSP) werden die Datenbits eines Multiplex-Rahmens bitweise nach Maßgabe von Zuordnungs-Informationen in die in Frage kommenden Speicherzellen eingetragen. Die Speicherzellen der einzelnen Datenspeicher werden für die Abgabe von gespeicherten Datenbits an den Vermittlungsbus von einer zentralen Steuereinrichtung (ZS) her synchron in einer festgelegten Reihenfolge angesteuert. Nach Maßgabe von Freigabe-Informationen wird dabei von den einander entsprechenden Datenbits der einzelnen Datenspeicher lediglich eines freigegeben, die übrigen dagegen maskiert. Die Ausgangs-Anschlußeinrichtungen werden für die Übernahme gültiger Datenbits in einer entsprechenden Reihenfolge angesteuert.

## Beschreibung

Die Erfindung betrifft eine Koppeleinrichtung für die Aufnahme von über eine Mehrzahl von Eingangs-Anschlußleitungen in Zeitkanälen periodisch wiederholt auftretender Eingangs-Multiplexrahmen zugeführten Datenströmen und für deren Weiterleitung über eine Mehrzahl von Ausgangs-Anschlußeinrichtungen in Zeitkanälen periodisch wiederholt auftretender Ausgangs-Multiplexrahmen.

Derartige Koppeleinrichtungen können generell benutzt werden, um über Multiplexstrecken in Zeitkanälen periodisch wiederholt auftretender Pulsrahmen zugeführte Datenströme entsprechend den für diese Datenströme festgelegten Verbindungswegen auf eine Mehrzahl von abgehenden Multiplexstrecken zu verteilen, d.h. die in den einzelnen ankommenden Zeitkanälen auftretenden Datenströme in Zeitkanäle abgehender Multiplexstrecken einzufügen. Unter Datenströme sind dabei auch beispielsweise Ströme von digitalen Sprachinformationen zu verstehen, die über PCM-Strecken aufzunehmen und weiterzuleiten sind.

Im Zusammenhang mit Koppelnetzen für Zeitmultiplex-Vermittlungsstellen ist es bereits aus "Nachrichtentechnische Zeitschrift (ntz)", 1970, Heft 9, Seiten 465 bis 471, bekannt, für eine zeitliche Zuordnung zwischen Zeitkanälen ankommender Multiplexleitungen und Zeitkanälen abgehender Multiplexleitungen zentrale Zeitkoppelstufen zu verwenden. Derartige zentrale Zeitkoppelstufen weisen dabei einen Speicher auf, um die in ankommenden Zeitkanälen auftretenden Signalströme für eine zeitgerechte Weiterleitung in abgehenden Zeitkanälen zwischenzuspeichern. Dabei kann ein derartiger Speicher derart ausgebildet sein, daß das Einschreiben in diesen wahlfrei, das Auslesen dagegen zyklisch geschieht.

Es ist nun Aufgabe der vorliegenden Erfindung, einen Weg zu zeigen, wie eine Koppeleinrichtung der eingangs genannten Art ausgebildet werden kann, um dieser Koppeleinrichtung in Zeitkanälen zugeführte Datenströme mit einem geringen schaltungstechnischen Aufwand und Steuerungsaufwand in abgehende Zeitkanäle einfügen zu können.

Gelöst wird diese Aufgabe durch die im Patentanspruch 1 angegebenen Merkmale.

Die Erfindung bringt dabei den Vorteil mit sich, daß durch die dezentrale Speicherung der Datenströme und die damit verbundene dezentrale ausgangsbezogene Zeitkanalzuordnung in den zentralen Einrichtungen lediglich geringe Vorleistungen zu treffen sind. So ist es beispielsweise möglich, ohne Modifizieren der zentralen Einrichtungen die Koppeleinrichtung modular zu erweitern.

Ein weiterer Vorteil der erfindungsgemäßen Koppeleinrichtung besteht darin, daß mit dieser ein bitweises Rangieren von Datenströmen möglich ist. Auf diese Weise ist die Koppeleinrichtung nicht an hinsichtlich der Bitanzahl festgelegte Zeitkanalstrukturen gebunden.

Vorteilhafte Ausgestaltungen der Koppeleinrichtung gemäß der vorliegenden Erfindung ergeben sich aus den Unteransprüchen.

Im folgenden wird die vorliegende Erfindung anhand eines Ausführungsbeispiels und anhand von auf dieses sich beziehende Zeichnungen näher erläutert.
- FIG 1: zeigt in einem Blockschaltbild eine Koppeleinrichtung gemäß der vorliegenden Erfindung,
- FIG 2: zeigt einen möglichen Aufbau einer der in FIG 1 lediglich schematisch dargestellten Eingangs-Anschlußeinrichtungen, und
- FIG 3: zeigt in schematischer Form das in den in FIG 1 dargestellten Eingangs-Anschlußeinrichtungen realisierte Steuerungsprinzip.

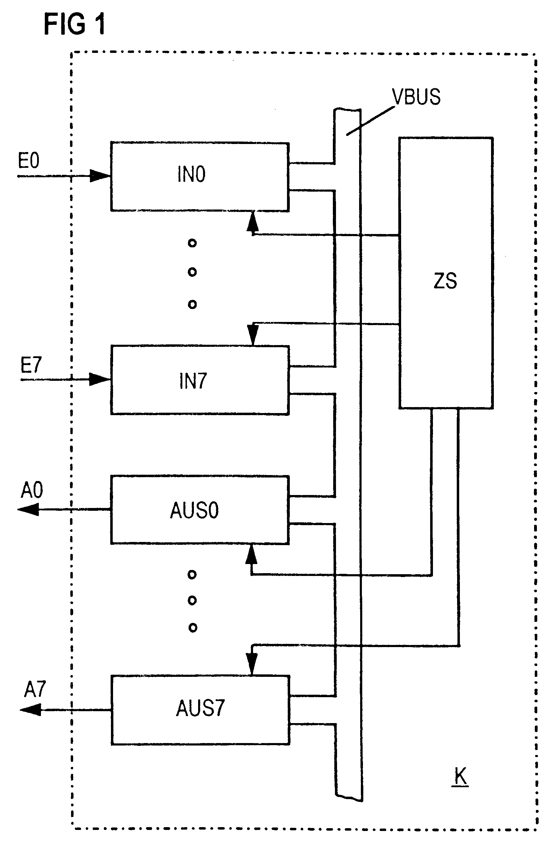

In FIG 1 ist eine Koppeleinrichtung K dargestellt, an welche eine Mehrzahl von Eingangs-Multiplex-Leitungen sowie eine Mehrzahl von Ausgangs-Multiplex-Leitungen angeschlossen ist. Bei dem vorliegenden Ausführungsbeispiel sind jeweils acht Eingangs- und acht Ausgangs-Multiplex-Leitungen vorgesehen, die mit E0,...,E7 bzw. A0,...,A7 bezeichnet sind. Auf diesen Multiplex-Leitungen erfolgt die Übertragung von Datenströmen in festgelegten Multiplex-Rahmen, wobei jedem der Datenströme in periodisch wiederholt auftretenden Multiplex-Rahmen ein festgelegter Zeitkanal zugeordnet ist. Ein solcher Zeitkanal kann dabei ≧ 1 Datenbitstellen innerhalb eines Multiplex-Rahmens umfassen.

Durch die Koppeleinrichtung K werden die über die einzelnen Eingangs-Multiplex-Leitungen E0,...,E7 zugeführten Datenströme auf die Ausgangs-Multiplex-Leitungen A0,...,A7 verteilt, d.h. die aufgenommenen Datenströme werden in festgelegten Zeitkanälen der einzelnen Ausgangs-Multiplex-Leitungen weitergeleitet. Die Zuordnung zwischen einem auf einer Eingangs-Multiplex-Leitung für einen Datenstrom festgelegten Zeitkanal und einer für die Weiterleitung vorgesehenen Ausgangs-Multiplex-Leitung sowie dem auf dieser zu benutzenden Zeitkanal wird dabei beispielsweise bei Vorliegen von Wählverbindungen im Zuge des Aufbaus der jeweiligen Verbindung festgelegt. Bei Vorliegen von Festverbindungen wird diese Zuordnung fest vorgegeben.

Die Koppeleinrichtung K weist nach FIG 1 für den Anschluß der genannten Eingangs-Multiplex-Leitungen E0,...,E7 jeweils eine gesonderte Eingangs-Anschlußeinrichtung auf. Die Eingangs-Anschlußeinrichtungen sind entsprechend ihrer Zuordnung zu den einzelnen Eingangs-Multiplex-Leitungen mit IN0,...,IN7 bezeichnet. In entsprechender Weise sind für den Anschluß der Ausgangs-Multiplex-Leitungen A0,...,A7 gesonderte Ausgangs-Anschlußeinrichtungen vorgesehen, die mit AUS0,...,AUS7 bezeichnet sind. Die Eingangs-Anschlußeinrichtungen und Ausgangs-Anschlußeinrichtungen sind dabei gemeinsam an einen Vermittlungsbus VBUS angeschlossen, der von einer zentralen Steuereinrichtung ZS gesteuert ist.

Die einer Eingangs-Anschlußeinrichtung (IN0,...,IN7) in Zeitkanälen eines Multiplex-Rahmens zugeführten Datenströme werden jeweils bitweise in einen der jeweiligen Eingangs-Anschlußeinrichtung zugehörigen Datenspeicher abgelegt, wobei dieses bitweise Ablegen ausgangsbezogen nach Maßgabe der zuvor erwähnten Leitungs- und Zeitkanalzuordnung durchgeführt wird. Hierfür weist der Datenspeicher, wie im folgenden noch näher erläutert wird, eine Mehrzahl von Speicherbereichen mit jeweils einer Vielzahl von Speicherzellen auf, die jeweils einer bestimmten Datenbitstelle eines Multiplex-Rahmens auf der jeweiligen Ausgangs-Multiplex-Leitung individuell zugeordnet sind. In diese Speicherzellen werden die einzelnen aufgenommenen Datenbits jeweils im Zuge eines hinsichtlich der Adressierung wahlfreien Schreibvorganges entsprechend ihrer festgelegten Bitposition innerhalb eines Multiplex-Rahmens auf der jeweiligen Ausgangs-Multiplex-Leitung eingetragen, so daß in den Speicherzellen individuell für die einzelnen Ausgangs-Multiplex-Leitungen die innerhalb eines Multiplex-Rahmens zu übertragenden Datenbits bitpositionsgerecht abgelegt sind.

Für den Datenspeicher ist im übrigen eine Mehrzahl von Speicherbereichen vorgesehen, um, wie im folgenden noch erläutert wird, zu einer Zeit, während Datensignale aus einem Speicherbereich ausgelesen werden, kontinuierlich in einen anderen Speicherbereich Datensignale einschreiben zu können. Für die Abgabe der in einem Speicherbereich der Datenspeicher der Eingangs-Anschlußeinrichtungen IN0,...,IN7 gespeicherten Datenbits werden die Speicherzellen des Speicherbereiches der einzelnen Datenspeicher periodisch wiederholt nacheinander in einer festgelegten Reihenfolge angesteuert. Dieses erfolgt unter der Steuerung der zentralen Steuereinrichtung ZS synchron für die Datenspeicher sämtlicher Eingangs-Anschlußeinrichtungen. Dies bedeutet, daß durch das synchrone Ansteuern der einzelnen Speicherzellen in den Datenspeichern zu jeder Bitstelle eines über eine Ausgangs-Multiplex-Leitung abzugebenden Multiplex-Rahmens zunächst von jedem der Datenspeicher ein Datenbit bereitgestellt ist. Welches von diesen Datenbits dann tatsächlich als gültiges Datenbit an den Vermittlungsbus VBUS abzugeben ist, ist durch in den Eingangs-Anschlußeinrichtungen jeweils hinterlegte Freigabe-Informationen festgelegt. Diese Freigabe-Informationen werden durch die zentrale Steuereinrichtung ZS bereitgestellt. Die auf diese Weise als gültig freigegebenen Datenbits werden schließlich dem Vermittlungsbus zugeführt. Für eine Übernahme dieser Datenbits durch die in Frage kommenden Ausgangs-Anschlußeinrichtungen werden diese individuell von der zentralen Steuereinrichtung ZS her über gesonderte, in FIG 1 dargestellte Steuerleitungen aufnahmebereit gesteuert. Dies erfolgt in einer Reihenfolge, die der Reihenfolge der Ansteuerung der Speicherzellen in den Datenspeichern der Eingangs-Anschlußeinrichtungen entspricht. Die auf diese Weise in die einzelnen Ausgangs-Anschlußeinrichtungen aufgenommenen Datenbits werden dann an die zugehörige Ausgangs-Multiplex-Leitung weitergeleitet.

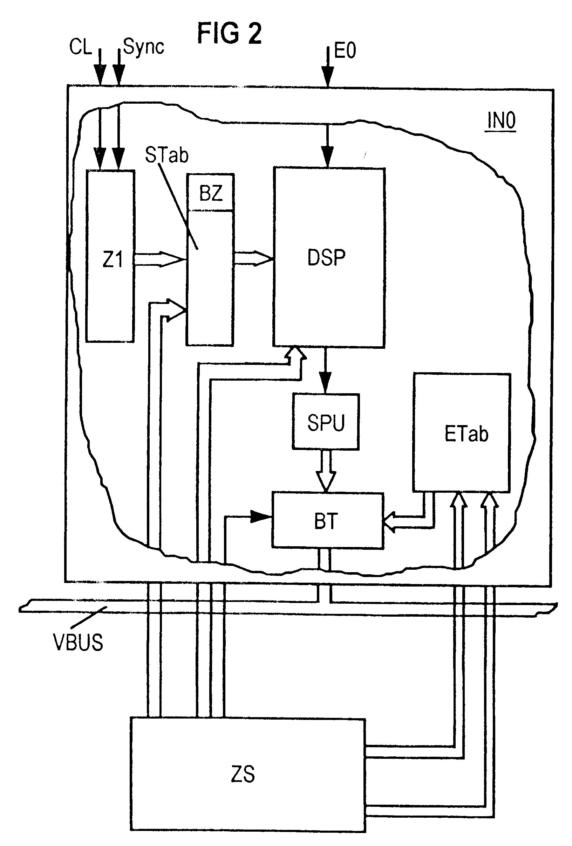

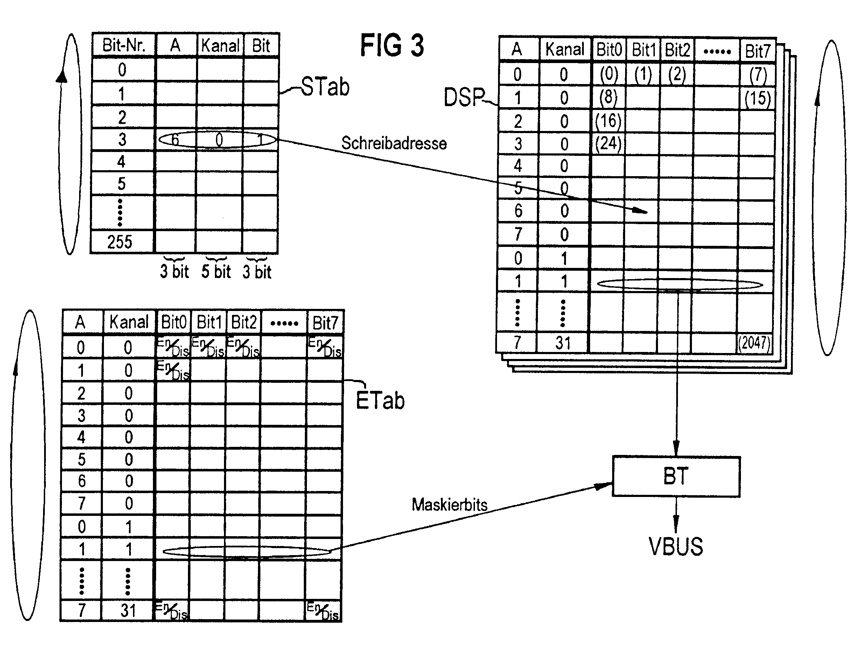

Nachdem vorstehend ein Überblick über die Funktionsweise der in FIG 1 dargestellten Koppeleinrichtung K gegeben wurde, wird nunmehr anhand der FIG 2 und 3 auf den Aufbau der gleich ausgebildeten Eingangs-Anschlußeinrichtungen IN0,...,IN7 am Beispiel der Eingangs-Anschlußeinrichtung IN0 näher eingegangen. Dabei sind lediglich die für das Verständnis der vorliegenden Erfindung erforderlichen Schaltungselemente wiedergegeben. Dabei wird für die folgende Erläuterung lediglich als Beispiel angenommen, daß für die Eingangs- und Ausgangs-Multiplex-Leitungen E0,...,E7 bzw. A0,...,A7 jeweils Multiplex-Rahmen festgelegt sind, die über 32 Zeitkanäle für jeweils acht Datenbits verfügen. Eine derartige Rahmenstruktur ist beispielsweise für die Übertragung von digitalen Sprachinformationen in PCM30/32-Systemen benutzt.Darüber hinaus wird angenommen, daß der Vermittlungsbus VBUS als bitparalleler Bus mit einer Breite von 8 Bits ausgebildet ist.

Nach FIG 2 weist die Eingangs-Anschlußeinrichtung IN0 einen bereits oben erwähnten Datenspeicher DSP auf, dem die von der Eingangs-Multiplex-Leitung E1 empfangenen Datenbits zugeführt sind. Dieser Datenspeicher weist eine Mehrzahl von Speicherbereichen auf, die jeweils entsprechend der angenommenen Rahmenstruktur und der insgesamt acht vorhandenen Ausgangs-Multiplex-Leitungen über 2048 1-Bit-Speicherzellen verfügen, die in FIG 3 mit 0 bis 2047 bezeichnet sind. Von diesen Speicherzellen sind jeweils acht aufeinanderfolgende Speicherzellen als Zellengruppe einem der Zeitkanäle eines Multiplex-Rahmens für die jeweilige Ausgangs-Multiplex-Leitung zugeordnet. Das heißt, es sind insgesamt 256 Zellengruppen vorgesehen, die jeweils acht Bitstellen (Bit 0 bis Bit 7) entsprechend der Anzahl der in einem Zeitkanal eines Multiplex-Rahmens vorgesehenen acht Datenbitstellen umfassen. Dabei sind den Ausgangs-Multiplex-Leitungen A0,...,A7 jeweils von den ersten acht Zellengruppen eine für den ersten Zeitkanal (Kanal 0), von den zweiten acht Zellengruppen jeweils eine für den zweiten Zeitkanal (Kanal 1) und schließlich von den letzten acht Zellengruppen jeweils eine für den 32 Zeitkanal (Kanal 31) zugeordnet. Das heißt, es findet durch die Organisation des Datenspeichers eine zeitkanalweise Verschachtelung für die einzelnen Ausgangs-Multiplex-Leitungen statt.

Wie bereits oben erwähnt, weist der Datenspeicher eine Mehrzahl von gleich organisierten Speicherbereichen auf. Bei dem vorliegenden Ausführungsbeispiel sind ≧ 3 Speicherbereiche vorgesehen, wobei in einem der Speicherbereiche empfangene Datenbits übernommen werden, während parallel dazu ein weiterer Speicherbereich für die oben angegebene Abgabe gespeicherter Datenbits angesteuert ist. Unter der Voraussetzung, daß die Multiplex-Rahmen auf den einzelnen Empfangs-Multiplex-Leitungen zu einem internen, u.a. für die Lesevorgänge in den einzelnen Datenspeichern steuernden Systemtakt frequenz- und phasensynchron auftreten, würden jedoch zwei Speicherbereiche in den einzelnen Datenspeichern ausreichen.

Für die Realisierung derart ausgebildeter Datenspeicher können dabei sogenannte "Dual-Port"-Speicherbausteine verwendet werden, in denen logisch eine entsprechende Mehrzahl von Speicherbereichen festgelegt wird. Alternativ dazu können die einzelnen Speicherbereiche der Datenspeicher auch durch separate Speicherbausteine aufgebaut sein.

Für die Aufnahme der auf der Empfangs-Multiplex-Leitung E1 auftretenden Datenbits in den Speicher DSP der Eingangs-Anschlußeinrichtung IN0 wird mit Hilfe eines zyklisch umlaufenden Zählers Z1 die Bitposition der einzelnen Datenbits innerhalb eines Multiplex-Rahmens bestimmt. Dieser Zähler wird durch ein den Anfang eines Multiplex-Rahmens anzeigenden Synchronisiersignal Sync auf einen definierten Anfangszählerstand gesetzt, von dem aus der Zählerstand mit Hilfe eines dem Zähler zugeführten Datenbittaktes CL fortlaufend verändert wird. Bei Empfang eines Datenbits wird dabei der aktuelle Zählerstand, der der Bitposition dieses Datenbits innerhalb eines Multiplex-Rahmens entspricht, als Adresseninformation einem Sortier-Speicher STab zugeführt. In diesem Sortier-Speicher ist unter jeder der zugeführten Adressen und damit für jede der Bitpositionen innerhalb eines Multiplex-Rahmens eine Adresseninformation gespeichert, unter welcher das jeweilige empfangene Datenbit in dem Datenspeicher DSP abzuspeichern ist. Eine solche Adresseninformation wird dem Datenspeicher zugeführt, um ein gerade empfangenes Datenbit abzuspeichern. Zusätzlich zu dem Sortier-Speicher STab ist ein zyklisch umlaufender Bereichszähler BZ vorgesehen, dessen Zählerstand nach jedem Zählzyklus des Zählers Z1 verändert ist und der aktuelle Zählerstand denjenigen Speicherbereich des Datenspeichers DSP bezeichnet, in welchem gerade empfangene Datenbits abzuspeichern sind. Dieser aktuelle Zählerstand wird dem Datenspeicher DSP zusätzlich als Adresseninformation zugeführt. Unter der Steuerung des Bereichszählers BZ werden die einzelnen Speicherbereiche des Datenspeichers DSP nacheinander für die Aufnahme von Datenbits benutzt.

Für das Auslesen von in einem der Speicherbereiche des Datenspeichers DSP gespeicherten Datenbits werden dessen Speicherzellen fortlaufend nacheinander, beginnend mit der Speicherzelle 0 und endend mit der Speicherzelle 2047, für eine Leseoperation angesteuert. Dafür erhält der Datenspeicher entsprechende Adresseninformationen jeweils in Form einer den Speicherbereich sowie die jeweilige Speicherzelle bezeichnenden Adresse von der zentralen Steuereinrichtung ZS zugeführt. Die damit am Ausgang des Datenspeichers auftretenden Datenbits werden an einen Serien-Parallel-Wandler SPU weitergeleitet, welcher jeweils acht aufeinanderfolgende Datenbits, die in ihrer Anzahl einer zuvor erwähnten Zellengruppe innerhalb des Datenspeichers DSP entsprechen, zu einer parallelen Bitgruppe umgesetzt. Die aufeinanderfolgenden Bitgruppen werden dann einem Bustreiber BT zugeführt. Dieser Bustreiber erhält von einem Freigabe-Speicher ETab oben bereits erwähnte Freigabe-Informationen zugeführt, um die einer gerade aufgenommenen Bitgruppe zugehörigen Datenbits einzeln als gültig freizugeben bzw. zu sperren, d.h. das jeweilige Datenbit zu maskieren. Der Bustreiber ist hierfür bei dem vorliegenden Ausführungsbeispiel als sogenannter "Tristate"-Treiber ausgebildet, dessen Bitstellen gesondert leitfähig bzw. hochohmig gesteuert werden.

Der Freigabe-Speicher ETab ist für die gerade erläuterte Steuerung des Bustreibers BT gemäß FIG 3 derart ausgebildet, daß in diesem jeder der in dem Datenspeicher DSP festgelegten, in FIG 3 dargestellten Zellengruppen eine Zellengruppe zugeordnet ist, in welcher gesondert für jede Bitstelle eine Freigabe- bzw. Maskierinformation gespeichert ist. Dieser Freigabe-Speicher wird parallel zu dem jeweiligen Speicherbereich des Datenspeichers DSP mit den von der zentralen Steuereinrichtung ZS her bereitgestellten Adresseninformationen angesteuert, um die unter der jeweiligen Adresse gespeicherten Freigabe-Informationen an den Bustreiber BT abzugeben.

Die erläuterten Steuerungsvorgänge für das Auslesen und Bereitstellen von in dem gerade ausgewählten Speicherbereich des Datenspeichers DSP gespeicherten Datenbits laufen solange ab, bis sämtliche in diesem Speicherbereich gespeicherten Datenbits ausgelesen und nach einer Umsetzung in Bitgruppen durch den Bustreiber BT bereitgestellt sind. Im Anschluß daran wird dann für die Abgabe gespeicherter Datenbits ein anderer Speicherbereich des Datenspeichers DSP ausgewählt, welcher dann in entsprechender Weise in die zuvor erläuterten Steuerungsvorgänge einbezogen ist. Dies bedeutet, daß die einzelnen Speicherbereiche des Datenspeichers DSP zyklisch wiederholt nacheinander für die Abgabe von gespeicherten Datenbits angesteuert werden.

Das erläuterte Auslesen von Datenbits aus dem Datenspeicher DSP und die Bereitstellung von Bitgruppen durch den Bustreiber BT erfolgt parallel in sämtlichen Eingangs-Anschlußeinrichtungen IN0,...,IN7. Durch die gezielte Maskierung der ungültigen Datenbits durch die einzelnen Bustreiber treten schließlich auf dem Vermittlungsbus VBUS nacheinander Bitgruppen auf, die jeweils nur über gültige Datenbits verfügen. Diese Bitgruppen werden dann den in Frage kommenden Ausgangs-Anschlußeinrichtungen AUS01,...,AUS7 zugeführt, in dem diese zyklisch wiederholt nacheinander in einer Reihenfolge angesteuert werden, die der Reihenfolge der Ansteuerung der einzelnen Zellengruppen eines Speicherbereiches der Datenspeicher DSP in den Eingangs-Anschlußeinrichtungen IN0,...,IN7 entspricht. Die auf diese Weise von den einzelnen Ausgangs-Anschlußeinrichtungen übernommenen Bitgruppen werden dann nach einer Parallel-Serien-Umsetzung an die jeweils zugehörige Ausgangs-Multiplex-Leitung A0,...,A7 weitergeleitet.

Im übrigen sind die genannten Bustreiber BT der einzelnen Eingangs-Anschlußeinrichtungen IN0,...,IN7 über gesonderte, in FIG 2 dargestellte Steuerleitungen von der zentralen Steuereinrichtung ZS her sperrbar, so daß die einzelnen Eingangs-Anschlußeinrichtungen gezielt an den Vermittlungsbus VBUS angeschaltet bzw. von diesem abgetrennt werden können. Dabei erfolgt das zyklische Ansteuern der Eingangs-Anschlußeinrichtungen IN0,...,IN7 und der Ausgangs-Anschlußeinrichtungen AUS0,...,AUS7 unabhängig davon, ob diese an den Vermittlungsbus VBUS angeschlossen sind oder nicht bzw. ob die Anzahl der Datenbits in den für die einzelnen Multiplex-Leitungen E0,...,E7; A0,...,A7 festgelegten Multiplex-Rahmen voll ausgenutzt ist oder nicht.

Darüber hinaus sei noch darauf hingewiesen, daß die Speicherinhalte des Sortier-Speichers STab und des Freigabe-Speichers ETab von der zentralen Steuereinrichtung ZS bereitgestellt sind und mit jeder erforderlichen Änderung aktualisiert werden. Eine solche Änderung ist beispielsweise mit jedem Aufbau oder Abbau einer Verbindung erforderlich. Die zentrale Steuereinrichtung ZS hat, wie in FIG 2 angedeutet, für die Durchführung derartiger Änderungen Zugriff zu den genannten Speichern. Hierfür sind bei dem vorliegenden Ausführungsbeispiel zyklisch wiederholt Zugriffszeiten vorgesehen. Darüber hinaus werden die Freigabe-Speicher der einzelnen Eingangs-Anschlußeinrichtungen regelmäßig von der zentralen Steuereinrichtung ZS ausgelesen, um in diesen Speicherfehler erkennen zu können, die zu fehlerhaften Freigaben einzelner Datenbits und damit zu Bitkollisionen auf dem Vermittlungsbus VBUS führen.

Abschließend sei noch darauf hingewiesen, daß die anhand der FIG 2 und 3 erläuterte Ausgestaltung der Eingangs-Anschlußeinrichtungen IN0,...,IN7 und des Vermittlungsbusses VBUS lediglich eine mögliche Ausführungsform darstellen. Insbesondere kann die Organisation der Datenspeicher in den einzelnen Eingangs-Ahschlußeinrichtungen modifiziert sein, wenn für den Vermittlungsbus hinsichtlich der Übertragungsbreite von Datenbits eine von dem erläuterten Beispiel abweichende Struktur gewählt ist.

Darüber hinaus ist die vorliegende Erfindung auch dann anwendbar, wenn auf den einzelnen Multiplex-Leitungen eine festgelegte Anzahl aufeinanderfolgender Multiplex-Rahmen in einem Überrahmen zusammengefaßt sind. Die einzelnen Datenbits eines solchen Überrahmens werden dabei in der oben angegebenen Weise behandelt. Eine solche Vorgehensweise bringt gegenüber einer Behandlung von einzelnen Multiplex-Rahmen eine feinere Granularität mit sich.

## Patentansprüche

1. Koppeleinrichtung für die Aufnahme von einer Mehrzahl von Eingangs-Anschlußeinrichtungen (IN0,...,IN7) zugeführten, in Zeitkanälen periodisch wiederholt auftretender Eingangs-Multiplexrahmen übertragenen Datenströmen und für deren Weiterleitung über eine Mehrzahl von Ausgangs-Anschlußeinrichtungen (AUS0,...,AUS7) in Zeitkanälen periodisch wiederholt auftretender Ausgangs-Multiplexrahmen,
wobei die Koppeleinrichtung derart ausgebildet ist, daß die Eingangs-Anschlußeinrichtungen (IN0,...,IN7) und die Ausgangs-Anschlußeinrichtungen (AUS0,...,AUS7) gemeinsam an einen Vermittlungsbus (VBUS) angeschlossen sind, daß jeder der Eingangs-Anschlußeinrichtungen ein Datenspeicher (DSP) zugehörig ist,
daß der jeweilige Datenspeicher über eine Mehrzahl von Speicherbereichen mit jeweils einer Mehrzahl von Speicherzellen (0,...,2047) verfügt, die den Datenbitstellen eines Ausgangs-Multiplexrahmens für die einzelnen Ausgangs-Anschlußeinrichtungen (AUS0,...,AUS7) individuell zugeordnet sind,
daß für die Aufnahme von der jeweiligen Eingangs-Anschlußeinrichtung (IN0,...,IN7) in einem Eingangs-Multiplexrahmen zugeführten Datenbits die Speicherzellen der einzelnen Speicherbereiche des zugehörigen Datenspeichers (DSP) bitweise individuell und wahlfrei nach Maßgabe von der jeweiligen Eingangs-Anschlußeinrichtung zur Verfügung stehenden Zuordnungs-Informationen ansteuerbar sind,
daß unter der Steuerung einer zentralen Steuereinrichtung (ZS) die einander zugeordneten Speicherzellen der Speicherbereiche der den Eingangs-Anschlußeinrichtungen zugehörigen Datenspeicher (DSP) synchron zyklisch wiederholt in einer festgelegten Reihenfolge für die Abgabe von gespeicherten Datenbits ansteuerbar sind,
daß nach Maßgabe von den Eingangs-Anschlußeinrichtungen (IN0,...,IN7) jeweils zur Verfügung stehenden Freigabe-Informationen von den synchron bereitgestellten, einander entsprechenden Datenbits der einzelnen Datenspeicher (DSP) lediglich eines dem Vermittlungsbus (VBUS) zugeführt ist, die übrigen dagegen maskiert sind,
daß die Ausgangs-Anschlußeinrichtungen (AUS0,...,AUS7) für die Übernahme der auf dem Vermittlungsbus (VBUS) auftretenden Datenbits zyklisch wiederholt nacheinander in einer festgelegten Reihenfolge ansteuerbar sind, die der für die Ansteuerung der Speicherzellen der Datenspeicher (DSP) festgelegten Reihenfolge entspricht,
und daß von den einander entsprechenden Speicherbereichen der Datenspeicher zyklisch wiederholt einer für die Aufnahme, ein anderer dagegen zeitlich parallel für die Abgabe von Datenbits benutzt ist.

2. Vermittlungseinrichtung nach Anspruch 1,
**dadurch gekennzeichnet,**
daß die Zuordnungs-Informationen für die jeweilige Eingangs-Anschlußeinrichtung (IN0, ,IN7) in einem zugehörigen Zuordnungs-Speicher (STab) gespeichert sind, welcher für jedes der in den Datenspeicher (DSP) aufzunehmenden Datenbits mit einer Adresse angesteuert ist, die der Datenbitstelle innerhalb eines Eingangs-Multiplexrahmens für das jeweilige Datenbit entspricht, und dabei eine unter der jeweiligen Adresse gespeicherte Adresse für die Ansteuerung des zugehörigen Datenspeichers (DSP) bereitstellt.

3. Vermittlungseinrichtung nach Anspruch 1 oder 2, **dadurch gekennzeichnet,**
daß die Freigabe-Informationen für die jeweilige Eingangs-Anschlußeinrichtung (IN0,...,IN7) in einem zugehörigen Freigabe-Speicher (ETab) gespeichert sind, in welchem den Speicherzellen des zugehörigen Datenspeichers zugeordnete Steuerinformationen gespeichert sind, nach deren Maßgabe mit dem Vermittlungsbus verbundene Koppelmittel zugeführte Datenbits an den Vermittlungsbus abgeben bzw. maskieren.

4. Vermittlungseinrichtung nach Anspruch 2 oder 3, **dadurch gekennzeichnet,**
daß die Zuordnungstabelle bzw. Freigabe-Tabelle von der zentralen Steuereinrichtung her mit jedem Aufbau oder Abbau einer Verbindung aktualisiert wird.

5. Vermittlungseinrichtung nach einem der Ansprüche 1 bis 4, **dadurch gekennzeichnet,**
daß in dem Datenspeicher der jeweiligen Eingangs-Anschlußeinrichtung (IN0,...,IN7) jeweils eine festgelegte Anzahl aufeinander folgender Speicherzellen als Speicherzellen-Gruppe einer der Ausgangs-Anschlußeinrichtungen zugeordnet ist, daß in den Speicherzellen-Gruppen jeweils gespeicherte Datenbits als Bitgruppe dem bitparallel ausgebildeten Vermittlungsbus zugeführt sind,
und daß von den Ausgangs-Anschlußeinrichtungen bei deren jeweiliger Ansteuerung eine gerade auf dem Vermittlungsbus bereitgestellte Bitgruppe aufgenommen wird.
